(19) Europäisches Patentamt
European Patent Office
Office européen des brevets

(11) **EP 2 634 712 A2**

(12) **EUROPEAN PATENT APPLICATION**
published in accordance with Art. 153(4) EPC

(43) Date of publication:
**04.09.2013 Bulletin 2013/36**

(21) Application number: **11836651.7**

(22) Date of filing: **28.10.2011**

(51) Int Cl.:
**G06F 19/00** (2011.01)  **G06F 9/44** (2006.01)

(86) International application number:
**PCT/KR2011/008120**

(87) International publication number:
**WO 2012/057559 (03.05.2012 Gazette 2012/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2011 KR 20110110687
28.10.2010 KR 20100106308**

(71) Applicant: **Acriil Inc.
Gangnam-gu, Seoul 135-816 (KR)**

(72) Inventors:
• **PARK, Wei Jin
Seoul 137-941 (KR)**

• **LEE, Se Hwa
Seoul 137-941 (KR)**
• **KO, Eui Yul
Daejeon 305-701 (KR)**
• **YEOM, Ik Jun
Seoul 135-796 (KR)**
• **HWANG, Seung Won
Seoul 138-200 (KR)**

(74) Representative: **Thorniley, Peter et al
Kilburn & Strode LLP
20 Red Lion Street
London WC1R 4PJ (GB)**

(54) **INTELLIGENT EMOTION-INFERRING APPARATUS, AND INFERRING METHOD THEREFOR**

(57) The present disclosure provides an intelligent emotion-inferring apparatus and inferring method therefor. The intelligent emotion-inferring apparatus includes: an emotional-word-storing unit, which classifies emotional words into items including at least one among similarity, positivity or negativity, and emotional intensity, using classes of emotion comprising a basic emotion group which classifies human emotions and a detailed emotion group which classifies the basic emotion group, and stores the words in an emotional-word dictionary; a sentence-converting unit which ascertains the words and phrases of sentence logged by a user and converts the words and phrases into a basic format; a match-checking unit which checks the converted words and phrases for words and phrases matching those in the emotional-word dictionary; and an emotion-inferring unit, which applies a probabilistic model on the basis of co-occurrence of the converted words and phrases, and infers emotions on the basis of the probabilistic model.

FIG. 1

EP 2 634 712 A2

**Description**

[Technical Field]

The present disclosure in some embodiments relates to an intelligent emotion-inferring apparatus and an inferring method therefor. More particularly, the present disclosure relates to an intelligent emotion-inferring apparatus and an inferring method therefor, capable of inferring emotional states of a user using a probabilistic model method and adaptively expressing emotions according to an inferred result.

[Background]

Recently, the spread of Internet technology widely extends as far as to wireless Internet. This enables an Internet user to communicate with another user having a wired or wireless communication terminal using a connected computer, and communicate with him or her even while being in motion using a mobile communication terminal such as PDA (personal digital assistant), laptop computer, mobile phone and smart phone. In addition to the voice communication and data file exchange, such wired and wireless communications allow a user to talk to another user through a text message using a messenger service or to form a new online community by visiting Blog of his/her own or other communication user to make text messages or to upload images or moving pictures.

While communicating in an online community, one sometimes needs to express his/her emotional states to other users or to guess emotional states of other users as in an offline community. For this purpose, online community service providers offer services to express or guess emotional states of users in a variety of ways. For example, a community service provider who uses a messenger service provides a variety of emoticon selection menus corresponding to emotional states, so that users can express their emotional states through a chat window by selecting emoticons depending on their emotional states. Further, the community service may search for whether there are specific words in sentences input by a user through a chat window or a bulletin board and display corresponding icons when the specific words are searched for, whereby emotional expressions are made automatically for the input sentences.

In general, emotions of humans are not constant but changed from moment to moment depending on situations, locations, atmospheres and so on. Therefore, it is very troublesome for users to alter their expression of emotional states changing depending on situations or atmospheres as such by selecting emoticons each time.

Further, emotion or feeling has quite personal attributes, and psychological factors to determine such human emotion can be generally classified into fright, fear, hatred, anger, joy, happiness and sadness. However, psychological factors felt by persons for the same situation may be different from one to another, and emotional intensity expressed by persons also may be different from one to another. Nevertheless, it may not be a correct expression for a current emotional state of a user to uniformly express the user's emotion by searching for a specific word out of a sentence input by the user.

[Disclosure]

[Technical Problem]

Therefore, the present disclosure has been made in an effort to provide an intelligent emotion-inferring apparatus and a inferring method therefor, capable of inferring emotional states of a user using a probabilistic model method and adaptively expressing emotions according to the inferred result.

[Summary]

At least one aspect of this description relates to an intelligent emotion-inferring apparatus. The intelligent emotion-inferring apparatus includes an emotional-word-storing unit configured to classify emotional words into items including at least one among similarity, positivity or negativity, and emotional intensity, using classes of emotion comprising a basic emotion group which classifies human motions and a detailed emotion group which classifies the basic emotion group, and to store the words as an emotional-word dictionary. The intelligent emotion-inferring apparatus further includes a sentence-converting unit configured to ascertain words and phrases of a sentence logged by a user and converting the words and phrases into a basic format. The intelligent emotion-inferring apparatus further includes a match-checking unit configured to check words or phrases among the converted words and phrases, which match with the emotional-word dictionary. The intelligent emotion-inferring apparatus further includes an emotion-inferring unit configured to apply a probabilistic model on the basis of co-occurrence of the converted words and phrases, and infer emotions on the basis of the applied probabilistic model.

The intelligent emotion-inferring apparatus may further include an emotional-log-storing unit configured to store an emotional-log formed to include word and word, word and phrase, and phrase and phrase on the basis of the words or phrases checked by the match-checking unit.

The intelligent emotion-inferring apparatus may further includes a request signal receiving unit configured to receive an emotional conjecture request signal for words or phrases selected by the user, wherein the emotion-inferring unit infers emotion for the selected words or phrases.

The intelligent emotion-inferring apparatus may further include a neutrality determining unit configured to determine whether the words or phrases are neutral. The intelligent emotion-inferring apparatus may further include a log information search unit configured to search for whether log information equal to or above a predetermined value is stored in the emotional-log-storing unit when the determined words or phrases are not neutrality words or phrases. Here, the emotion-inferring unit may infer emotions for the determined words or phrases when log information equal to or above the predetermined value is stored.

The intelligent emotion-inferring apparatus may further include a Web browsing unit configured to browse a predetermined Web by calling a Web browsing function, when there is not log information equal to or above the predetermined value in the emotional-log-storing unit, wherein the emotional-log-storing unit obtains log information for the determined words or phrases from the predetermined Web and stores the log information.

The intelligent emotion-inferring apparatus may further include a relevance measuring unit configured to measure a relevance of the emotion inferred by the emotion-inferring unit for the determined words or phrases. The intelligent emotion-inferring apparatus may further include an emotional word adder configured to add and store the determined words or phrases, the inferred emotion and an emotional quotient in the emotional-word dictionary, when the measured relevance exceeds a predetermined threshold value.

The emotional-word-storing unit may classify the same emotional word into a plurality of emotional classes, classifies each classified emotional class into at least one of similarity, positivity or negativity, and emotional intensity and store the classified ones in the emotional-word dictionary.

The probabilistic model may be an algorithm calculating a probability that a specific word or phrase belongs to a specific emotion using a frequency of the specific word or phrase in an entire corpus.

When at least one of emotional class, similarity, positivity or negativity, and emotional intensity is inferred differently according to environment information including at least one of input time, location and weather of a sentence logged by each user and profile information including gender, age, character and vocation of each user, the emotional-word-storing unit may store an emotional-word dictionary for each relevant user.

The emotion-inferring unit may include a Web search preparing unit configured to generate word set information made by dividing or merging in N-gram scheme the converted words and phrases that do not exist in the emotional-word dictionary. The emotion-inferring unit may include a Web mining unit configured to generate collection information produced by a Web search that collects words and phrases including the word set information. The probabilistic model may be applied on the basis of the co-occurrence of the collection information.

The match-checking unit may classify parts of speech in grammar for a language corresponding to the converted words and phrases and generate weight applied information in which weights predetermined according to the parts of speech are given to the converted words and phrases. The emotion-inferring unit may apply the probabilistic model on the basis of co-occurrence of the weight applied information.

At least one aspect of this description relates to an intelligent emotion-inferring method. The intelligent emotion-inferring method may include classifying emotional words into items including at least one among similarity, positivity or negativity, and emotional intensity, using classes of emotion comprising a basic emotion group which classifies human motions and a detailed emotion group which classifies the basic emotion group, and storing the words in an emotional-word dictionary. The intelligent emotion-inferring method may include ascertaining words and phrases of a sentence logged by a user and converting the words and phrases into a basic format. The intelligent emotion-inferring method may include checking words or phrases among the converted words and phrases, which match with the emotional-word dictionary. The intelligent emotion-inferring method may include applying a probabilistic model on the basis of co-occurrence of the converted words and phrases, and inferring emotions on the basis of the applied probabilistic model.

The intelligent emotion-inferring method may include storing an emotional-log formed including word and word, word and phrase, and phrase and phrase on the basis of the checked words or phrases.

The intelligent emotion-inferring method may further include receiving an emotional conjecture request signal for the words or phrases selected by the user, wherein the inferring comprises inferring emotion for the selected words or phrases.

The intelligent emotion-inferring method may include determining whether words or phrases are neutral. The intelligent emotion-inferring method may include searching for whether log information equal to or above a predetermined value is stored in an emotional log storing unit when the determined words or phrases are not neutrality words or phrases. The inferring may include inferring emotions for the determined words or phrases when log information equal to or above the predetermined value is stored.

The intelligent emotion-inferring method may further include browsing a predetermined Web by calling a Web browsing function, when there is no log information equal to or above the predetermined value in the emotional log storing unit. The intelligent emotion-inferring method may further include obtaining log information for the determined words or phrases from the predetermined Web and storing the log information as emotion information.

The intelligent emotion-inferring method may further include measuring a relevance of the emotion inferred by the emotion inferring unit for the determined words or phrases. The intelligent emotion-inferring method may further include adding and storing the determined words or phrases, the inferred emotion and an emotional quotient to the emotional-word dictionary, when the measured relevance exceeds a predetermined threshold value.

The storing may include classifying the same emotional word into a plurality of emotional classes, classifying the each classified emotional class into at least one of similarity, positivity or negativity, and emotional intensity and storing the classified ones in the emotional-word dictionary.

The probabilistic model may be an algorithm calculating a probability that a specific word or phrase belongs to a specific emotion using a frequency of the specific word or phrase in an entire corpus.

When at least one of emotional class, similarity, positivity or negativity, and emotional intensity is determined differently according to environment information including at least one of input time, location and weather of a sentence logged by each user and profile information including gender, age, character and vocation of each user, the storing may include storing an emotional-word dictionary for each relevant user.

The inferring may include preparing a Web search to generate word set information made by dividing or merging in N-gram scheme the converted words and phrases that do not exist in the emotional-word dictionary. The inferring may include performing a Web mining to generate collection information produced by Web search that collects words and phrases including the word set information in a Web. The probabilistic model may be applied on the basis of the co-occurrence of the collection information.

The checking may include classifying parts of speech in grammar for a language corresponding to the converted words and phrases and generating weight applied information in which predetermined weights for the parts of speech are given to the converted words and phrases, and the inferring may include applying the probabilistic model on the basis of the co-occurrence of the weight applied information.

[Advantageous Effects]

According to the present disclosure as described above, a user's emotion can be adaptively expressed according to emotional information obtained empirically by inferring the user's emotional state using a probabilistic model method and enabling emotions corresponding to the inferred result to be automatically expressed.

Further, according to the present disclosure as described above, a user can express his/her adaptive emotions according to user's surrounding environment by making emotional intensity, positivity or negativity and the like different in consideration of the user's surrounding environment such as location, weather, time and so on.

[Description of Drawings]

FIG. 1 is a schematic diagram of an intelligent emotion-inferring apparatus according to at least one embodiment of the present disclosure;

FIG. 2 is a diagram of an example of an emotional-word dictionary according to at least one embodiment of the present disclosure;

FIG. 3 is a diagram of an example of emotional log information stored;

FIG. 4 is a diagram of an example of a log information acquisition by a Web browsing unit; and

FIG. 5 is a flowchart of an intelligent emotion-inferring method according to at least one embodiment of the present disclosure.

[Detailed Description]

Hereinafter, at least one embodiment of the present disclosure will be described in detail with reference to the accompanying drawings. In the following description, like reference numerals designate like elements although the elements are shown in different drawings. Further, in the following description of the at least one embodiment, a detailed description of known functions and configurations incorporated herein will be omitted for the purpose of clarity and for brevity.

Additionally, in describing the components of the present disclosure, terms like first, second, A, B, (a), and (b) are used. These are solely for the purpose of differentiating one component from another, and one of ordinary skill would understand the terms are not to imply or suggest the substances, order or sequence of the components. If a component is described as 'connected', 'coupled', or 'linked' to another component, one of ordinary skill in the art would understand the components are not necessarily directly 'connected', 'coupled', or 'linked' but also are indirectly 'connected', 'coupled', or 'linked' via a third component.

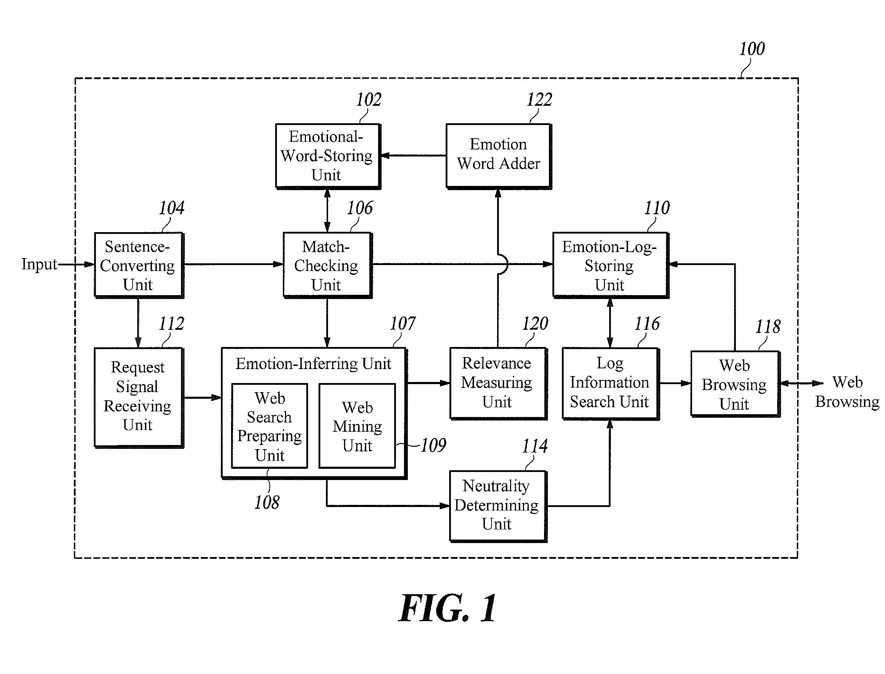

FIG. 1 is a schematic diagram of an intelligent emotion-inferring apparatus according to at least one embodiment of the present disclosure. Referring to FIG. 1, the emotion-inferring apparatus 100 according to at least one embodiment of the present disclosure may include an emotional-word-storing unit 102, a sentence-converting unit 104, a match-checking unit 106, an emotion-inferring unit 107, an emotional-log-storing unit 110, a request signal receiving unit 112, a neutrality determining unit 114, a log information search unit 116, a Web browsing unit 118, a relevance measuring unit 120 and an emotional-word adder 122. Here, while it is described that the intelligent emotion-inferring apparatus 100 infers emotion on the basis of a sentence input by a user, the present embodiment of the present disclosure may also be applied to an apparatus in which emotion is inferred on the basis of a voice input by a user. In this case, emotion may be inferred on the basis of tone or tone-color of a user's voice, and the method of classifying tone or tone-color is known in the art so that its description will be omitted.

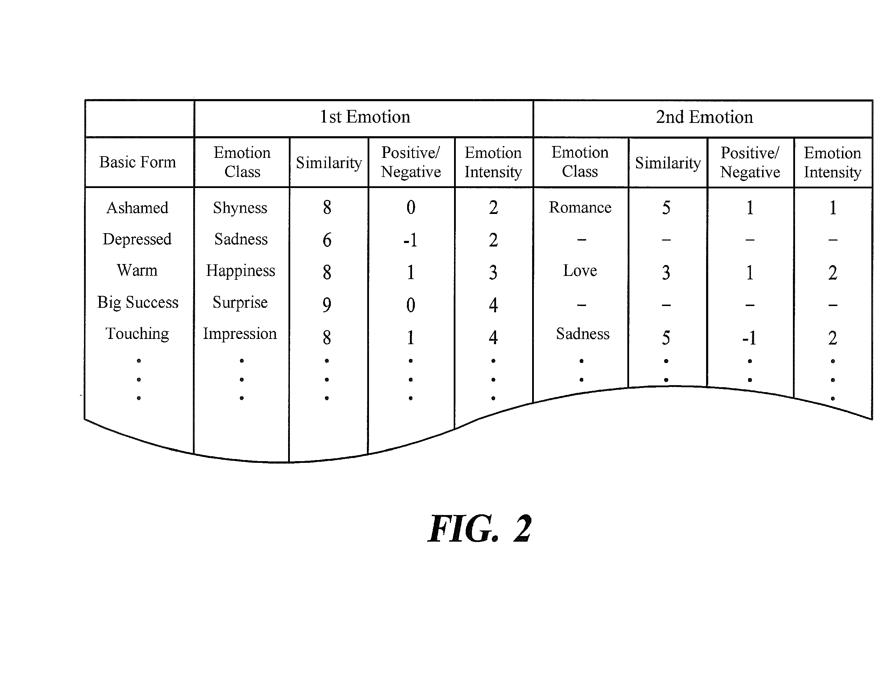

The emotional-word-storing unit 102 classifies emotional words into items including at least one of similarity, positivity or negativity and emotional intensity using emotion classes comprising a basic emotion group which classifies human emotions and a detailed emotion group which classifies the basic emotion group, and stores them in an emotional-word-dictionary. Here, the basic emotion group may be formed of about eight groups and the detailed emotion group may be formed of about 33 groups, to which both emotion groups are not limited. Further, a synthetic emotion group may be formed by combining the basic emotion group with the detailed emotion group. The basic, detailed and synthetic emotion groups may be included in emotion class, and the emotion class may be applied to an emotion module. Emotion is defined as a state of feeling that results in stimulus or stimulus change. Emotion is dependent on psychological factors such as surprise, fear, hatred, anger, pleasure, happiness, and sadness. By the way, individuals may feel different emotions to the same stimulus, and the emotion intensity may also be different. In consideration of such states, the emotion-word storing unit 102 classifies the emotional words such as "happy", "ashamed" and "dejected" into respective emotion classes, classifies the classified emotion classes, based on the similarity, the positivity or negativity, and the emotional intensity, and stores the emotional words in the emotional-word dictionary. Here, the emotion classes are the classification of human's internal feeling states such as satisfaction, longing, and happiness. In at least one embodiment of the present disclosure, the emotional words are classified into a total of seventy-seven emotion classes and may be matched with the relevant emotion class. Here, the number of the emotion classes is merely an example of kinds of classifiable emotions and is not limited thereto. The similarity represents a likeness between the relevant word and the item of the emotion class and may be expressed as a value within a predetermined range. The positivity or negativity is a level that represents whether the attribute of the relevant word is a positive emotion or a negative emotion and may be expressed as a positive value or a negative value within a predetermined range with zero as a reference value. The emotion intensity represents the strength of emotion among the attributes of the relevant word and may be expressed as a value within a predetermined range. Fig. 2 is a diagram of an example of an emotional-word-dictionary according to at least one embodiment of the present disclosure. In FIG. 2, the similarity was expressed as a value within a range of 0 to 10, the positivity or negativity was expressed as a value of 0, 1 or -1, and the emotional intensity was expressed as a within a range of 0 to 10. However, these values are not limited to the shown ranges and various modifications can be made thereto. For example, the positivity or negativity may be expressed as a value of unit of 0.1 within a range of -1 to 1, and the similarity or the emotion intensity may also be expressed as a value of unit of 0.1 within a range of 0 to 1. Further, the emotional-word-storing unit 102 may classify the same word into a plurality of emotion classes, like "ashamed", "warm", and "touching" shown in Fig.2. In this case, each of the classified emotion classes may be classified based on at least one of the similarity, the positivity or negativity, and the emotional intensity and then stored in the emotional word dictionary. Moreover, even in the case of the same emotional word, the emotion class, the similarity, the positivity or negativity, and the emotional intensity may be differently recognized according to environment information including at least one of input time of a sentence logged by a user, location, and weather. Additionally, the emotion class, the similarity, the positivity or negativity, and the emotional intensity may vary according to profile information including a user's gender, age, character, and occupation. In a case where at least one of the emotion class, the similarity, the positivity or negativity, and the emotional intensity is differently inferred, an emotional-word-storing unit 102 may set an emotional-word-dictionary for each user on the basis of emotional log information for each user and store it, in consideration of environment information and profile information for each user.

The sentence converting unit 104 ascertains words and phrases of a sentence logged by the user and converts them into a basic format. That is, the sentence converting unit 104 may primarily segment the sentence logged by the user into a plurality of words and then convert the segmented words into basic formats. In addition, the sentence converting unit 104 may ascertain phrases on the basis of idiomatically used words or word combinations among the segmented words and then convert the ascertained phrases into a basic format.

The match-checking unit 106 checks the matched words or phrases by comparing the respective words and phrases converted by the sentence converting unit 104 with the emotional-word dictionary stored in the emotional-word storing unit 102.

Meanwhile, the match-checking unit 106 classifies parts of speech in grammar for a language corresponding to the words and phrases converted by the sentence converting unit 104, and generates weight applied information in which weights predetermined according to the parts of speech are given to the converted words and phrases. When the match-checking unit 106 generates the weight applied information, the emotion-inferring unit 107 can apply the probabilistic model on the basis of co-occurrence of the weight applied information. That is, the match-checking unit 106 can check a role of each part of speech in the words and phrases converted by the sentence converting unit 104, and give weights according the roles. Here, the weights also can be expressed in an empirical value.

The emotion-inferring unit 107 may apply a probabilistic model on the basis of co-occurrence of the converted words and phrases and then infer the emotion according to the probabilistic model applied. For example, when assuming that a word "overwhelmed" among the words that have been converted into the basic format by the emotion-converting unit 104 is matched with an emotion class "touching" of the emotional-word dictionary, the emotion inferring unit 107 may apply the probabilistic model based on a combination of the word "overwhelmed" and another word or phrase converted into the basic format and then infer the emotion based on the probabilistic model applied. Here, the probabilistic model is an algorithm for calculating a probability of belonging to a specific emotion by using the frequency of a specific word or phrase in an entire corpus. Based on the probabilistic model, a probability that a new word will belong to a specific emotion can be calculated. For example, as expressed in Equation 1 below, the emotion similarity to a new word can be conjectured by calculating the frequency of the combination of a new word (W) and a specific emotion (C) in the sentence within the corpus for the total frequency of the new word (W) within the corpus.

$$\text{Emotion Similarity}(W,C) = \frac{\text{Frequency of Comb. of New Word W and Specific Emotion C in Sentence within Corpus}}{\text{Total Frequency of New Word W within Corpus}}$$

Equation 1

In addition, a pointwise mutual information (PMI) may be used for calculation of co-occurrence similarity of word. In this case, the PMI may be calculated using Equation 2 below.

$$PMI(W,C) = \frac{\text{Frequency of Comb. of New Word W and Specific Emotion C in Sentence within Corpus}}{(\text{Total Frequency of New Word W within Corpus}) * (\text{Frequency of Particular Emotion C within Corpus})}$$

Equation 2

As an equation similar to the PMI, dice coefficient of Dice (W,C) may be used.

$$Dice(W,C) = \frac{2 * (\text{Frequency of Comb. of New Word W and Specific Emotion C in Sentence within Corpus})}{(\text{Total Frequency of New Word W within Corpus}) + (\text{Frequency of Particular Emotion C within Corpus})}$$

Equation 3

The calculation formula for conjecturing the emotion similarity is not limited to the proposed equations and various modifications can be made thereto.

In this manner, the emotion inferring unit 107 may infer the emotions for <word + word>, <word + phrase> and <phrase + phrase> and then infer the emotion of the entire sentence by combining the respective inferred emotions.

Meanwhile, the emotion-inferring unit 107 includes a Web search preparing unit 108 and a Web mining unit 109. The Web search preparing unit 108 generates word set information made by dividing or merging in N-gram scheme the converted words and phrases that do not exist in the emotional-word dictionary. The Web mining unit 109 generates collection information produced by a Web search that collects words and phrases including the word set information of the Web search preparing unit 108 from a Web. That is, the emotion-inferring unit 107 can apply the probabilistic model based on co-occurrence of the collection information of the Web mining unit 109. Here, the N-gram includes at least one of Bigram, Monogram and Trigram. That is, the N-gram refers to a word sequence consisted of N word pairs when presuming a language model, the Monogram refers to a word sequence consisted of one word pair, and the Trigram refers to a word sequence consisted of three word pairs. Meanwhile, the Web mining refers to a data mining technology (procedure to discover an available correlation concealed in a lot of data, extract executable information and utilize it for decision making) in order to discover meaningful patterns, profiles and trends from a Web resource. Utilizing fields of such Web mining may include an information filtering, a competitor technology development monitoring, a mining of Web access log for availability analysis, and a browsing (browsing a user's moving path in a Web) support.

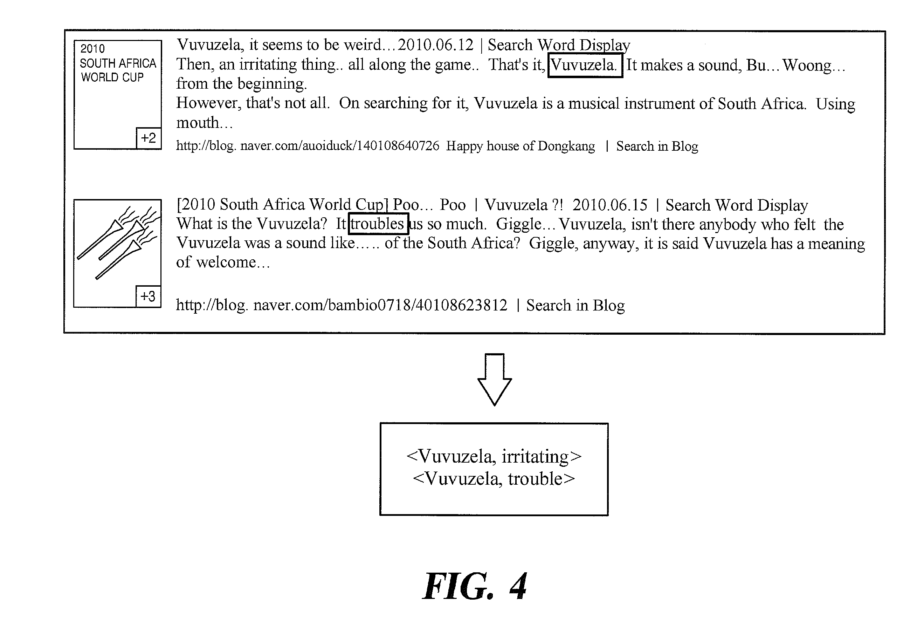

The emotion-log-storing unit 110 stores an emotion log formed to include word and word, word and phrase, and phrase and phrase on the basis of words or phrases checked by the match-checking unit 106. That is, the emotion-log-storing unit 110 stores sentences logged by a user as a combination of meaningful word and word, word and phrase, and phrase and phrase, in order to make an emotion conjecture for a new word. For example, the emotion-log-storing unit 110 may generate and store two emotion logs of <wanso-love> and <friend-love> by combining a basic format word "love", which is checked as having the emotion of "loving" by the match checking unit 106, with the words "wanso" and "friend", which have no emotion within the sentence, wherein the word "wanso" is a Korean chatting language abbreviation for 'absolutely precious'. In this case, the emotion logs may be stored with time information as shown in Fig. 4. The information stored with the emotion log information is not limited to the time information, and weather information and user position information may also be stored with the emotion log information.

The request signal receiving unit 112 can receive an emotion conjecture request signal for words or phrases selected by the user. That is, the user can request an emotion conjecture for a specific word or phrase within the logged sentence, and the request signal receiving unit 112 receives an emotion conjecture request signal for that. In this case, the emotion inferring unit 107 infers the emotion for the word or phrase only selected by the user correspondingly to the emotion conjecture request signal received by the request signal receiving unit 112.

The neutrality determining unit 114 determines whether the words or phrases are neutral. Here, the neutrality means that the emotion for the words or phrases does not exist. Generally, a title of animal or thing such as a puppy and a desk, a reference term such as I, You and We, and name of person can be determined as neutrality words. At this time, a neutrality word dictionary which stores neutral words or phrases in a dictionary can be prepared separately. In this case, the neutrality determining unit 114 can measure a frequency in the entire corpus for the words or phrases which are determined to be neutral, and add them to the neutrality word dictionary together with the relevant word or phrase.

When the neutrality determining unit 114 determines that the relevant word or phrase are not neutral, the log information search unit 116 searches for whether log information above a predetermined value is stored in the emotion log storing unit 110. That is, when the relevant word or phrase are not neutral, the log information search unit 116 searches for whether the relevant word or phrase are stored more than the predetermined times in the emotion log storing unit 110. At this time, the emotion inferring unit 107 is configured to infer the emotion for the phrase or sentence combined with the relevant word or phrase only when the relevant word or phrase are stored more than the predetermined times in the emotion log storing unit 110 by the log information search unit 116.

When it is determined that the relevant word or phrase are stored less than the predetermined times in the emotion log storing unit 110 by the log information search unit 116, the emotion inferring unit 107 can determine that there is no sufficient log information to infer emotion for the relevant word or phrase. In this case, the Web browsing unit 118 can browse a predetermined Web site by calling a Web browsing function, and obtain log information for the relevant word or phrase from the Web site. For example, when browsing a Web site for a word "Vuvuzela", the Web browsing unit 118 can obtain log information such as <Vuvuzela, chafe>, <vuvuzela, distressed> from the relevant Web site as shown in Fig.4. The obtained log information can be stored in the emotion log storing unit 110.

In case that the emotion for the relevant word or phrase are inferred on the basis of the log information browsed from a Web site by the Web browsing unit 118, the relevance measuring unit 120 measures a relevance between the emotion inferred by the emotion inferring unit 107 and the relevant word or phrase. Such an emotion can be measured by calculating a probability on the basis of the probabilistic model described above.

In case that the relevance measured by the relevance measuring unit 120 exceeds a predetermined threshold value, the emotion word adder 122 can add and store the relevant word or phrase, the inferred emotion, and the emotional quotient in an emotion word dictionary. For example, in case of measuring the relevance by calculating a probability using the three probabilistic models described above, when a value calculated by any one of the three probabilistic models exceeds the predetermined threshold value, the relevant word or phrase, the inferred emotion, and the emotional quotient can be added and stored in the emotion word dictionary.

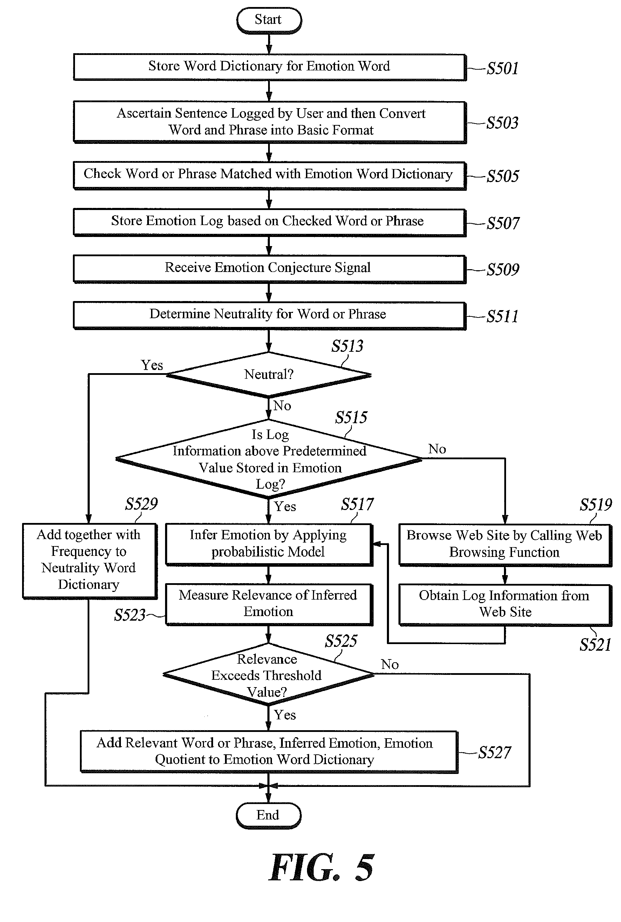

Fig. 5 is a flowchart of an intelligent emotion-inferring method according to at least one embodiment of the present disclosure. The intelligent emotion-inferring method according to at least one embodiment of the present disclosure will be described in detail with reference to Figs. 1 to 5.

The emotion word storing unit 102 classifies emotion words into items including at least one of similarity, positivity or negativity, and emotion intensity, using emotion classes including a basic emotion group which classifies human emotions and a detailed emotion group which classifies the basic emotion group, and stores the words in an emotional-word dictionary (S501).

At this time, the emotional-word-storing unit 102 can classify the same emotional word into a plurality of emotion classes. In this case, the emotional-word-storing unit 102 can classify respective classified emotion classes on the basis of at least one of similarity, positivity or negativity and emotion intensity and store them in an emotion word dictionary. Further, when at least one of emotional class, similarity, positivity or negativity, and emotional intensity is inferred differently according to environment information including at least one of input time of a sentence logged by a user, location, and weather and profile information including a user's gender, age, character and vocation, the emotional-word-storing unit 102 may set and store an emotional-word dictionary for each user on the basis of the emotion log information for each user.

The sentence converting unit 104 ascertains words and phrases for a sentence logged by the user and converts them into basic formats (S503). That is, the sentence converting unit 104 can primarily segment the sentence logged by the user into a plurality of words and then convert them into basic formats. It can also ascertain the phrase on the basis of idiomatically used words and word combinations among the segmented words and then convert the ascertained phrases into the basic formats.

The match-checking unit 106 compares respective words and phrases converted by the sentence converging unit 104 with the emotional-word dictionary stored in the emotional-word-storing unit 102 and then checks the words or phrases matched (S505). Meanwhile, in step S505, the match-checking unit 106 can classify parts of speech in grammar for a language corresponding to the words and phrases converted by the sentence converting unit 104 and then generate weight applied information in which predetermined weights according to parts of speech are given to the converted words and phrases. That is, in case that the match-checking unit 106 generated the weight applied information, the emotion-inferring unit 107 can apply a probabilistic model on the basis of co-occurrence of the weight applied information. Here, the weight may be expressed in an empirical value.

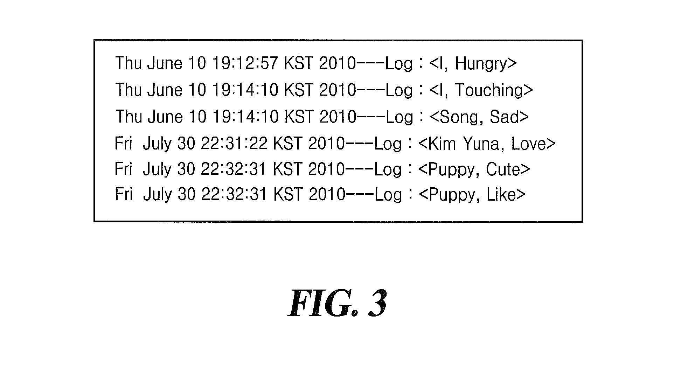

The emotional-log-storing unit 110 stores emotion log formed to include word and word, word and phrase, and phrase and phrase on the basis of the words or phrases checked by the match-checking unit 106 (S507). That is, the emotional-log-storing unit 110 stores sentences logged by the user to make emotion conjecture for new words as combinations of meaningful word and word, word and phrase, and phrase and phrase. For example, the emotional-log-storing unit 110 may generate and store two emotion logs of <wanso-love> and <friend-love> by combining the basic format word "love", which is checked as having the emotion of "loving" by the match checking unit 106, with the words "wanso" and "friend", which have no emotion within the sentence, wherein the word "wanso" is a Korean chatting language abbreviation for "absolutely precious". In this case, the emotion logs may be stored together with time information as shown in Fig. 3. Here, the information stored together with the emotion log information is not limited to time information, and weather information and user position information may also be stored together with the emotion log information.

The request signal receiving unit 112 can receive an emotion conjecture request signal for words or phrases selected by a user (S509). That is, the user can request an emotion conjecture for a specific word or phrase within the logged sentence, and the request signal receiving unit 112 can receive an emotion conjecture request signal for that.

The neutrality determining unit 114 determines whether the words or phrases are neutral (S511). Here, the neutrality means that the emotion for the words or phrases does not exist. Generally, a title of animal or thing such as a puppy and a desk, a reference term such as I, You and We, and name of person can be determined as neutrality words.

When the neutrality determining unit 114 determines that the relevant word or phrase are not neutral (S513), the log information search unit 116 searches for whether log information above a predetermined value is stored in the emotion log storing unit 110 (S515). That is, when the relevant word or phrase are not neutral, the log information search unit 116 searches for whether the relevant word or phrase are stored more than the predetermined times in the emotion log storing unit 110.

In case that log information above a value predetermined in the emotional log, the emotion-inferring unit 107 can apply a probabilistic model on the basis of co-occurrence of the converted words and phrases, and infer the emotion according to the applied probabilistic model (S517). At this time, the emotion-inferring unit 107 can infer the words or phrases only selected by the user correspondingly to the emotion conjecture request signal that was received by the request signal receiving unit 112. Further, the emotion-inferring unit 107 may be configured to infer the emotion for the relevant word or phrase and the combined phrase or sentence only when the relevant word or phrase has been stored more than predetermined times by the log information search unit 116. By the way, in step S517, the emotion-inferring unit 107 can generate word collection information produced by dividing or merging in N-Gram scheme the converted words and phrases that do not exist in the emotion word dictionary using the Web search preparing unit 108 included. Further, the emotion inferring unit 107 can generate collection information produced by a Web search that collects words and phrases including word collection information of the Web search preparing unit 108 using the Web mining unit 109 included. That is, when the collection information is generated by the Web mining unit 109, the emotion inferring unit 107 can apply the probabilistic model on the basis of the co-occurrence.

When log information less than a predetermined value is stored in the emotion log, the Web browsing unit 118 can browse a predetermined Web site by calling a Web browsing function (S519), and obtain log information for the relevant word or phrase from the Web site (S521).

When emotion for the relevant word or phrase is inferred on the basis of the log information browsed from the Web site by the Web browsing unit 118, the relevance measuring unit 120 measures a relevance between the emotion inferred by the emotion inferring unit 107 and the relevant word or phrase (S523). Such emotion can be measured by calculating probability on the basis of the probabilistic model described above.

When the relevance measured by the relevance measuring unit 120 exceeds a predetermined threshold value (S525), the emotion word adder 122 can add and store the relevant word or phrase, the inferred emotion and an emotion quotient in the emotion word dictionary. For example, in case of measuring the relevance by calculating the probability using the three probabilistic models described above, when a value calculated by any one of the three probabilistic models exceeds a predetermined threshold value, the relevant word or phrase, the inferred emotion, and the emotional quotient may be added and stored in the emotional-word dictionary.

Meanwhile, when the neutrality determining unit 114 determines that the relevant word or phrase be neutral, a frequency of the relevant word or phrase is measured and added to the neutrality word dictionary together with the relevant word or phrase (S529). The frequency of word is stored together in consideration that the meaning of the neutrality word may change and have emotion. Therefore, the frequency is checked in a predetermined period and then the change to the emotion word can be applied.

In the description above, although all of the components of the embodiments of the present disclosure may have been explained as assembled or operatively connected as a unit, one of ordinary skill would understand the present disclosure is not limited to such embodiments. Rather, within some embodiments of the present disclosure, the respective components are selectively and operatively combined in any number of ways. Every one of the components are capable of being implemented alone in hardware or combined in part or as a whole and implemented in a computer program having program modules residing in computer readable media and causing a processor or microprocessor to execute functions of the hardware equivalents. Codes or code segments to constitute such a program are understood by a person skilled in the art. The computer program is stored in a non-transitory computer readable media, which in operation realizes the embodiments of the present disclosure. The computer readable media includes magnetic recording media, optical recording media or carrier wave media, in some embodiments.

In addition, one of ordinary skill would understand terms like 'include', 'comprise', and 'have' to be interpreted in default as inclusive or open rather than exclusive or closed unless expressly defined to the contrary. All the terms that are technical, scientific or otherwise agree with the meanings as understood by a person skilled in the art unless defined to the contrary. One of ordinary skill would understand common terms as found in dictionaries are interpreted in the context of the related technical writings not too ideally or impractically unless the present disclosure expressly defines them so.

Although exemplary embodiments of the present disclosure have been described for illustrative purposes, those skilled in the art will appreciate that various modifications, additions and substitutions are possible, without departing from the essential characteristics of the disclosure. Therefore, exemplary embodiments of the present disclosure have been described for the sake of brevity and clarity. Accordingly, one of ordinary skill would understand the scope of the disclosure is not limited by the explicitly described above embodiments but by the claims and equivalents thereof.

CROSS-REFERENCE TO RELATED APPLICATION

If applicable, this application claims priority under 35 U.S.C §119(a) of Patent Application No. 10-2010-0106308, filed on October 28, 2010 and Patent Application No. 10-2011-0110687, filed on October 27, 2011 in Korea, the entire contents of which are incorporated herein by reference. In addition, this non-provisional application claims priorities in countries, other than the U.S., with the same reason based on the Korean Patent Applications, the entire contents of which are hereby incorporated by reference.

**Claims**

1. An intelligent emotion-inferring apparatus, comprising:

an emotional-word-storing unit configured to classify emotional words into items including at least one among similarity, positivity or negativity, and emotional intensity, using classes of emotion comprising a basic emotion group which classifies human motions and a detailed emotion group which classifies the basic emotion group, and to store the words in an emotional-word dictionary;
a sentence-converting unit configured to ascertain words and phrases of a sentence logged by a user and convert the words and phrases into a basic format;
a match-checking unit configured to check words or phrases among the converted words and phrases, which match with the emotional-word dictionary; and
an emotion-inferring unit configured to apply a probabilistic model on the basis of co-occurrence of the converted words and phrases, and to infer emotions on the basis of the applied probabilistic model.

2. The intelligent emotion-inferring apparatus of claim 1, further comprising an emotional-log-storing unit configured to store an emotional-log formed to include word and word, word and phrase, and phrase and phrase on the basis of the words or phrases checked by the match-checking unit.

3. The intelligent emotion-inferring apparatus of claim 1, further comprising a request signal receiving unit configured to receive an emotional conjecture request signal for words or phrases selected by the user,
wherein the emotion-inferring unit infers emotion for the selected words or phrases.

4. The intelligent emotion-inferring apparatus of claim 2, further comprising:

a neutrality determining unit configured to determine whether the words or phrases are neutral; and
a log information search unit configured to search for whether log information equal to or above a predetermined value is stored in the emotional-log-storing unit when the determined words or phrases are not neutrality words or phrases,
wherein the emotion-inferring unit infers emotions for the determined words or phrases when log information equal to or above the predetermined value is stored.

5. The intelligent emotion-inferring apparatus of claim 4, further comprising a Web browsing unit configured to browse a predetermined Web by calling a Web browsing function, when there is not log information equal to or above the predetermined value in the emotional-log-storing unit,
wherein the emotional-log-storing unit obtains log information for the determined words or phrases from the predetermined Web and stores the log information.

6. The intelligent emotion-inferring apparatus of claim 5, further comprising:

a relevance measuring unit configured to measure a relevance of the emotion inferred by the emotion-inferring unit for the determined words or phrases; and
an emotional word adder configured to add and store the determined words or phrases, the inferred emotion and an emotional quotient in the emotional-word dictionary, when the measured relevance exceeds a predetermined threshold value.

7. The intelligent emotion-inferring apparatus of claim 1, wherein the emotional-word-storing unit classifies the same emotional word into a plurality of emotional classes, classifies each classified emotional class into at least one of similarity, positivity or negativity, and emotional intensity and stores the classified ones in the emotional-word dictionary.

8. The intelligent emotion-inferring apparatus of claim 1, wherein the probabilistic model is an algorithm calculating a probability that a specific word or phrase belongs to a specific emotion using a frequency of the specific word or phrase in an entire corpus.

9. The intelligent emotion-inferring apparatus of claim 1, wherein, when at least one of emotional class, similarity, positivity or negativity, and emotional intensity is inferred differently according to environment information including at least one of input time, location and weather of a sentence logged by each user and profile information including gender, age, character and vocation of each user, the emotional-word-storing unit stores an emotional-word dictionary for each relevant user.

10. The intelligent emotion-inferring apparatus of claim 1, wherein the emotion-inferring unit includes:

a Web search preparing unit configured to generate word set information made by dividing or merging in N-gram scheme the converted words and phrases that do not exist in the emotional-word dictionary; and
a Web mining unit configured to generate collection information produced by a Web search that collects words and phrases including the word set information,
wherein the probabilistic model is applied on the basis of the co-occurrence of the collection information.

11. The intelligent emotion-inferring apparatus of claim 1, wherein the match-checking unit classifies parts of speech in grammar for a language corresponding to the converted words and phrases and generates weight applied information in which weights predetermined according to the parts of speech are given to the converted words and phrases, and the emotion-inferring unit applies the probabilistic model on the basis of co-occurrence of the weight applied information.

12. An intelligent emotion-inferring method, comprising:

classifying emotional words into items including at least one among similarity, positivity or negativity, and emotional intensity, using classes of emotion comprising a basic emotion group which classifies human motions and a detailed emotion group which classifies the basic emotion group, and storing the words in an emotional-word dictionary;
ascertaining words and phrases of a sentence logged by a user and converting the words and phrases into a basic format;
checking words or phrases among the converted words and phrases, which match with the emotional-word dictionary; and
applying a probabilistic model on the basis of co-occurrence of the converted words and phrases, and inferring emotions on the basis of the applied probabilistic model.

13. The intelligent emotion-inferring method of claim 12, further comprising storing an emotional-log formed including word and word, word and phrase, and phrase and phrase on the basis of the checked words or phrases.

14. The intelligent emotion-inferring method of claim 12, further comprising receiving an emotional conjecture request signal for the words or phrases selected by the user,
wherein the inferring comprises inferring emotion for the selected words or phrases.

15. The intelligent emotion-inferring method of claim 12, further comprising:

determining whether words or phrases are neutral; and
searching for whether log information equal to or above a predetermined value is stored in an emotional log storing unit when the determined words or phrases are not neutrality words or phrases,
wherein the inferring comprises inferring emotions for the determined words or phrases when log information equal to or above the predetermined value is stored.

16. The intelligent emotion-inferring method of claim 15, further comprising:

browsing a predetermined Web by calling a Web browsing function, when there is not log information equal to or above the predetermined value in the emotional log storing unit, and
obtaining log information for the determined words or phrases from the predetermined Web and storing the log information as emotion information.

17. The intelligent emotion-inferring method of claim 16, further comprising:

measuring a relevance of the emotion inferred by the emotion inferring unit for the determined words or phrases; and
adding and storing the determined words or phrases, the inferred emotion and an emotional quotient to the emotional-word dictionary, when the measured relevance exceeds a predetermined threshold value.

**18.** The intelligent emotion-inferring method of claim 12, wherein the storing comprises classifying the same emotional word into a plurality of emotional classes, classifying the each classified emotional class into at least one of similarity, positivity or negativity, and emotional intensity and storing the classified ones in the emotional-word dictionary.

**19.** The intelligent emotion-inferring method of claim 12, wherein the probabilistic model is an algorithm calculating a probability that a specific word or phrase belongs to a specific emotion using a frequency of the specific word or phrase in an entire corpus.

**20.** The intelligent emotion-inferring method of claim 12, wherein, when at least one of emotional class, similarity, positivity or negativity, and emotional intensity is determined differently according to environment information including at least one of input time, location and weather of a sentence logged by each user and profile information including gender, age, character and vocation of each user, the storing comprise storing an emotional-word dictionary for each relevant user.

**21.** The intelligent emotion-inferring method of claim 12, wherein the inferring comprises:

preparing a Web search to generate word set information made by dividing or merging in N-gram scheme the converted words and phrases that do not exist in the emotional-word dictionary; and
performing a Web mining to generate collection information produced by Web search that collects words and phrases including the word set information in a Web,
wherein the probabilistic model is applied on the basis of the co-occurrence of the collection information.

**22.** The intelligent emotion-inferring method of claim 12, wherein the checking comprises classifying parts of speech in grammar for a language corresponding to the converted words and phrases and generating weight applied information in which predetermined weights for the parts of speech are given to the converted words and phrases, and the inferring comprises applying the probabilistic model on the basis of the co-occurrence of the weight applied information.

**FIG. 1**

EP 2 634 712 A2

| Basic Form | 1st Emotion | | | | 2nd Emotion | | | |
|---|---|---|---|---|---|---|---|---|
| | Emotion Class | Similarity | Positive/ Negative | Emotion Intensity | Emotion Class | Similarity | Positive/ Negative | Emotion Intensity |
| Ashamed | Shyness | 8 | 0 | 2 | Romance | 5 | 1 | 1 |
| Depressed | Sadness | 6 | -1 | 2 | – | – | – | – |
| Warm | Happiness | 8 | 1 | 3 | Love | 3 | 1 | 2 |
| Big Success | Surprise | 9 | 0 | 4 | – | – | – | – |
| Touching | Impression | 8 | 1 | 4 | Sadness | 5 | -1 | 2 |
| ⋮ | ⋮ | ⋮ | ⋮ | ⋮ | ⋮ | ⋮ | ⋮ | ⋮ |

**FIG. 2**

EP 2 634 712 A2

Thu June 10 19:12:57 KST 2010---Log : <I, Hungry>
Thu June 10 19:14:10 KST 2010---Log : <I, Touching>
Thu June 10 19:14:10 KST 2010---Log : <Song, Sad>
Fri  July 30 22:31:22 KST 2010---Log : <Kim Yuna, Love>
Fri  July 30 22:32:31 KST 2010---Log : <Puppy, Cute>
Fri  July 30 22:32:31 KST 2010---Log : <Puppy, Like>

# FIG. 3

EP 2 634 712 A2

| 2010 SOUTH AFRICA WORLD CUP | Vuvuzela, it seems to be weird...2010.06.12 \| Search Word Display |
|---|---|

Vuvuzela, it seems to be weird...2010.06.12 | Search Word Display
Then, an irritating thing.. all along the game.. That's it, | Vuvuzela. | It makes a sound, Bu...Woong... from the beginning.
However, that's not all. On searching for it, Vuvuzela is a musical instrument of South Africa. Using mouth...

http://blog. naver.com/auoiduck/140108640726  Happy house of Dongkang  |  Search in Blog

+2

[2010 South Africa World Cup] Poo... Poo | Vuvuzela ?! 2010.06.15 | Search Word Display
What is the Vuvuzela? It | troubles | us so much. Giggle... Vuvuzela, isn't there anybody who felt the Vuvuzela was a sound like..... of the South Africa? Giggle, anyway, it is said Vuvuzela has a meaning of welcome...

http://blog. naver.com/bambio0718/40108623812  |  Search in Blog

+3

⇩

<Vuvuzela, irritating>
<Vuvuzela, trouble>

# FIG. 4

```
                        ( Start )
                            │
                            ▼
        ┌──────────────────────────────────────────┐
        │  Store Word Dictionary for Emotion Word   │──S501
        └──────────────────────────────────────────┘
                            │
                            ▼
        ┌──────────────────────────────────────────┐
        │ Ascertain Sentence Logged by User and then│──S503
        │   Convert Word and Phrase into Basic Format│
        └──────────────────────────────────────────┘
                            │
                            ▼
        ┌──────────────────────────────────────────┐
        │ Check Word or Phrase Matched with Emotion │──S505
        │           Word Dictionary                  │
        └──────────────────────────────────────────┘
                            │
                            ▼
        ┌──────────────────────────────────────────┐
        │ Store Emotion Log based on Checked Word   │──S507
        │              or Phrase                      │
        └──────────────────────────────────────────┘
                            │
                            ▼
        ┌──────────────────────────────────────────┐
        │     Receive Emotion Conjecture Signal      │──S509
        └──────────────────────────────────────────┘
                            │
                            ▼
        ┌──────────────────────────────────────────┐
        │    Determine Neutrality for Word or Phrase │──S511
        └──────────────────────────────────────────┘
                            │
                            ▼      S513
      Yes        ◇ Neutral? ◇
      ◄───────────────────────
                        │ No
                        ▼            S515
              ◇ Is Log Information above      ◇    No
              ◇ Predetermined Value Stored    ◇ ────────►
              ◇ in Emotion Log?               ◇
   S529                │ Yes      S517                      S519
 ┌──────────┐  ┌─────────────────┐   ┌──────────────────────┐
 │Add       │  │Infer Emotion by │   │Browse Web Site by    │
 │together  │  │Applying         │◄──│Calling Web Browsing  │
 │with      │  │probabilistic    │   │Function              │
 │Frequency │  │Model            │   └──────────────────────┘
 │to        │  └─────────────────┘             │
 │Neutrality│          │                       ▼
 │Word      │  ┌─────────────────┐   ┌──────────────────────┐
 │Dictionary│  │Measure Relevance│   │Obtain Log Information│
 └──────────┘  │of Inferred      │   │from Web Site         │
         S523──│Emotion          │   └──────────────────────┘
               └─────────────────┘            S521
                        │       S525
                        ▼
              ◇ Relevance Exceeds ◇   No
              ◇ Threshold Value?  ◇ ──────►
                        │ Yes
                        ▼
        ┌──────────────────────────────────────────┐
        │ Add Relevant Word or Phrase, Inferred     │──S527
        │ Emotion, Emotion Quotient to Emotion      │
        │ Word Dictionary                            │
        └──────────────────────────────────────────┘
                            │
                            ▼
                        ( End )
```

# FIG. 5

**EP 2 634 712 A2**

**Patent documents cited in the description**

- KR 1020100106308
- KR 1020110110687